## Europäisches Patentamt

## European Patent Office

## Office européen des brevets

(19)

(11) Numéro de publication: **0 178 972**
**B1**

(12) # FASCICULE DE BREVET EUROPEEN

(45) Date de publication du fascicule du brevet:
**07.12.88**

(21) Numéro de dépôt: **85401789.4**

(22) Date de dépôt: **17.09.85**

(51) Int. Cl.⁴: **F 16 C 39/06, H 02 K 7/09,**
**G 01 D 5/22**

(54) **Dispositif de détection magnétique des déplacements radiaux d'un rotor.**

(30) Priorité: **19.09.84 FR 8414374**

(43) Date de publication de la demande:
**23.04.86 Bulletin 86/17**

(45) Mention de la délivrance du brevet:
**07.12.88 Bulletin 88/49**

(84) Etats contractants désignés:
**CH DE GB IT LI SE**

(56) Documents cités:
**EP-A- 0 054 617**
**BE-A- 875 127**
**FR-A- 2 270 482**
**FR-A- 2 524 090**
**US-A- 4 114 960**

(73) Titulaire: **SOCIETE EUROPEENNE DE PROPULSION**
**(S.E.P.) Société Anonyme dite:, 24 Rue Salomon de**
**Rothschild, F-92150 Suresnes (FR)**

(72) Inventeur: **Brunet, Louis, Le bout aux Roussel Ste**
**Colombe, F-27950 St Marcel (FR)**
Inventeur: **Jolivet, Jean-Pierre, 49 rue de Falaise,**
**F-27620 Gasny (FR)**

(74) Mandataire: **Thevenet, Jean-Bruno et al, Cabinet BEAU**
**DE LOMENIE 55 rue d'Amsterdam, F-75008 Paris (FR)**

## Description

La présente invention a pour objet un dispositif de détection magnétique des déplacements radiaux d'un rotor monté sur des paliers magnétiques actifs, comprenant une pluralité d'éléments inductifs à entrefer variable solidaires du stator sur lequel sont montés lesdits paliers, et au moins un anneau de référence solidaire du rotor, placé en regard desdits éléments inductifs et délimitant avec ces derniers ledit entrefer variable.

On connait déjà divers types de détecteurs capables de détecter les déplacements et plus particulièrement les déplacements radiaux d'un rotor monté sur paliers magnétiques et servant à délivrer des signaux électriques d'erreur qui, par l'intermédiaire d'un dispositif d'asservissement, permettent de ramener le rotor dans une position prédéterminée. Les divers détecteurs de position peuvent être notamment de type optique, capacitif ou magnétique.

Un exemple de détecteur magnétique et de dispositif de détection associant plusieurs détecteurs magnétiques constitués par des éléments inductifs coopérant avec un anneau de référence solidaire du rotor est décrit dans le brevet français 2 214 890. Le dispositif de détection décrit dans le document précité vise à détecter essentiellement les seules variations des distances dites de référence, dues à un réel déplacement radial de l'axe du rotor et à limiter la détection des variations de distance dues à une variation du rayon de l'anneau de référence du dispositif de détection.

On sait en effet qu'il est extrêmement difficile de réaliser des anneaux de référence cylindriques présentant une circularité rigoureuse. Or, la prise en compte, par un dispositif de détection, de variations de distance dues à une variation du rayon de l'anneau de référence lié au rotor et non à un déplacement radial réel du rotor peut engendrer des vibrations préjudiciables dans la suspension magnétique et augmente la consommation d'énergie du dispositif d'asservissement du palier magnétique actif associé au dispositif de détection. Il est donc essentiel de pouvoir disposer d'un dispositif de détection efficace possédant un bon taux de réjection des harmoniques de la décomposition en série de Fourier de la courbe représentant, en fonction de l'angle polaire correspondant, la forme réelle du contour de l'anneau de référence du rotor avec lequel doit coopérer le dispositif de détection.

Le dispositif décrit dans le brevet français 2 214 890, bien qu'apportant une amélioration décisive par rapport aux dispositifs précédemment connus, ne parvient cependant pas à réduire l'influence des harmoniques impaires au-delà de la troisième harmonique et implique l'utilisation d'un grand nombre d'éléments inductifs de base à flux radial constitués par des petites pièces présentant un plan axial de symétrie et situées dans un plan radial, les diverses pièces élémentaires pouvant être intégrées dans un disque composé de tôles empilées et muni d'encoches dans lesquelles est bobiné un fil conducteur. Un tel mode de réalisation est peu approprié pour des dispositifs de détection destinés à équiper des petites machines comportant un détecteur de faible diamètre. Les petites encoches contribuent en effet à rendre la fabrication plus délicate, et le taux de réjection des harmoniques de rang élevé reste faible.

La présente invention vise précisément à remédier aux inconvénients précités et à permettre de réaliser de façon simple un dispositif de détection magnétique efficace présentant un fort taux de réjection de l'ensemble des harmoniques dues à la présence de défauts géométriques dans l'anneau de référence coopérant avec le dispositif de détection.

L'invention a encore pour objet de réaliser un dispositif de détection particulièrement bien adapté à la détection de déplacements radiaux de rotors de faible diamètre.

Ces buts sont atteints grâce à un dispositif de détection dans lequel, conformément à l'invention, les éléments inductifs comprennent chacun un circuit magnétique dont la section dans un plan axial présente la forme d'un U, et un bobinage disposé dans un plan radial qui constitue un plan de symétrie pour le circuit magnétique correspondant de telle sorte que chaque élément inductif crée en flux magnétique axial dans l'anneau de référence avec lequel il coopère, les éléments inductifs sont répartis dans deux plans radiaux voisins différents, un premier plan radial comprenant un premier anneau de référence solidaire du rotor, coopérant avec des premier et second éléments inductifs diamétralement opposés et présentant un premier plan axial de symétrie commun X'X, et un second plan radial comprenant un second anneau de référence solidaire du rotor, coopérant avec des troisième et quatrième éléments inductifs diamétralement opposés et présentant un second plan axial de symétrie commun Y'Y, et chaque élément inductif s'étend sur un arc de cercle de 120° environ.

Grâce à la combinaison de ces caractéristiques, on obtient une réjection totale de la troisième harmonique et des harmoniques multiples de trois, ainsi qu'une suppression partielle, mais substantielle des autres harmoniques de rang impair y compris d'harmoniques de rang élevé. Par ailleurs, la conception d'un dispositif de détection mettant en œuvre des éléments de détection à flux axial et disposant dans deux plans voisins, mais différents, les éléments de détection concourant à la détection selon deux directions perpendiculaires l'une à l'autre, conduit à une grande facilité de montage.

Les premier et second anneaux de référence superposés peuvent être distincts ou constitués par un anneau unique de référence.

Les premier et second anneaux de référence sont avantageusement réalisés en ferrite mais peuvent également, selon un autre mode de réalisation, être réalisés en un matériau bon conducteur non magnétique tel que l'argent, l'aluminium ou le bronze.

Le circuit magnétique des éléments inductifs peut être réalisé en ferrite ou, selon un autre mode de réalisation, à l'aide d'un empilement de tôles en forme de U disposées parallèlement à l'axe du rotor.

Avantageusement, les éléments inductifs sont montés en pont et les signaux fournis par deux éléments inductifs situés dans un même plan radial et diamétralement opposés se retranchent algébriquement l'un de l'autre.

Ceci permet de rejeter totalement toutes les harmoniques paires.

D'autres caractéristiques et avantages de l'invention ressortiront de la description suivante d'un mode particulier de réalisation, faite en référence aux dessins annexés sur lesquels:

— la figure 1 est une vue schématique en coupe montrant une paire d'éléments inductifs de détection, selon le plan I–I de la figure 2,

— la figure 2 est une vue schématique en coupe axiale selon le plan II–II de la figure 1, montrant un dispositif de détection selon l'invention avec deux sous-ensembles de détection superposés,

— les figures 3A à 3F montrent la forme de différentes harmoniques et la partie de ces signaux qui est supprimée par le dispositif de détection selon l'invention, et

— la figure 4 montre de façon schématique l'association dans un montage en pont de quatre éléments détecteurs d'un dispositif de détection selon l'invention.

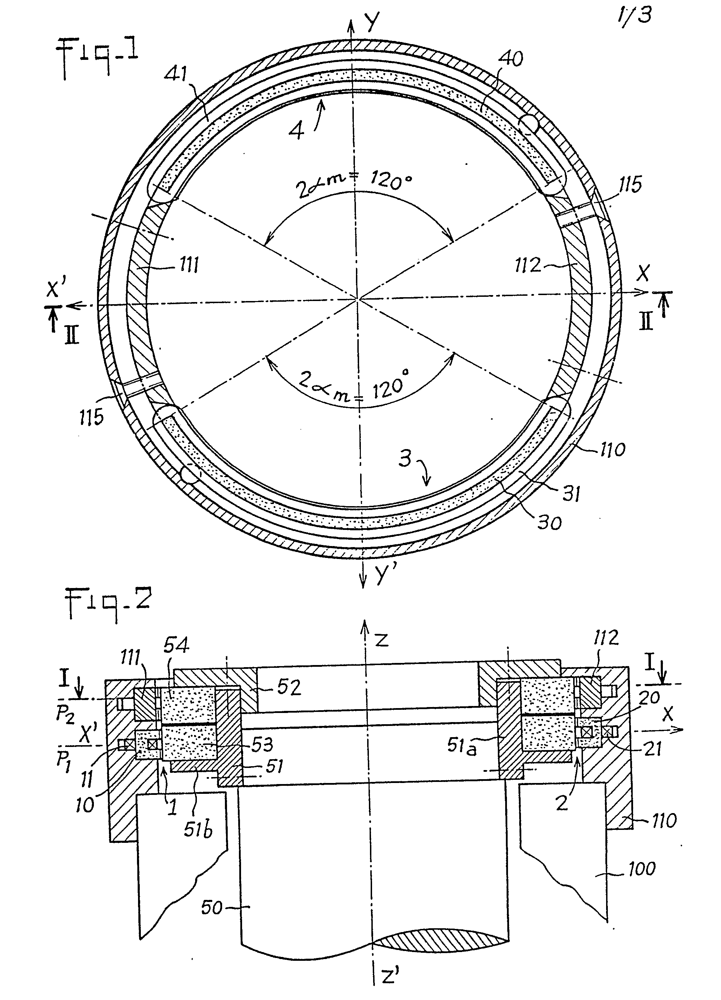

Les figures 1 et 2 montrent la structure d'ensemble d'un dispositif selon l'invention destiné à assurer la détection des déplacements radiaux d'un rotor 50 monté sans contact par rapport à un bâti 100, sur des paliers magnétiques actifs radiaux non représentés.

Le dispositif de détection, qui vise à détecter des déplacements du rotor 90 selon deux directions radiales X'X et Y'Y perpendiculaires entre elles et à l'axe Z'Z du rotor, comprend essentiellement deux sous-ensembles de détection disposés dans deux plans radiaux superposés voisins $P_1$ et $P_2$. Le sous-ensemble disposé dans le plan radial $P_1$ est destiné à mesurer des déplacements radiaux selon un axe X'X tandis que le sous-ensemble de détection disposé dans le plan radial $P_2$ est destiné à mesurer des déplacements radiaux selon un axe Y'Y perpendiculaire à l'axe X'X. Les deux sous-ensembles de détection correspondant aux directions X'X et Y'Y sont identiques mais décalés de 90° autour de l'axe Z'Z du rotor.

Chaque sous-ensemble de détection comprend deux détecteurs diamétralement opposés 1, 2 respectivement 3, 4 s'étendant chacun sur un arc de cercle de 120° et présentant un plan de symétrie constitué par le plan axial dont la trace sur le plan $P_1$ respectivement $P_2$ est constituée par l'axe de détection X'X respectivement Y'Y.

Chaque détecteur élémentaire 1, 2, 3, 4 comprend un circuit magnétique de stator 10, 20, 30, 40 qui est monté dans un corps 110 solidaire du bâti 100 et présente, vu en section dans un plan axial (figure 2), une forme de U. Un bobinage 11, 21, 31, 41 est disposé autour de chaque circuit magnétique de stator 10, 20, 30, 40, dans le plan

radial $P_1$ respectivement $P_2$ du sous-ensemble de détection correspondant. Le plan $P_1$ constitue ainsi un plan de symétrie pour les détecteurs 1 et 2 tandis que le plan $P_2$ constitue un plan de symétrie pour les détecteurs 3 et 4. Les deux détecteurs en arc de cercle 1, 2 respectivement 3, 4 d'un même sous-ensemble de détection sont maintenus en place dans des gorges formées dans le corps 110 de raccordement au bâti 100 et espacés l'un de l'autre par des entretoises 111, 112 également en forme d'arc de cercle.

Chaque paire de détecteurs 1, 2 respectivement 3, 4 est placée en regard d'un anneau de référence 53, respectivement 54 monté dans une pièce 51 de raccordement au rotor 50 comprenant une partie cylindrique 51a de maintien de la partie arrière interne des anneaux de référence 53, 54 et une aile annulaire plane 51b supportant le premier anneau de référence 53. Un chapeau 52 raccordé à la partie cylindrique 51a de la pièce de raccordement 51 assure le maintien en position du deuxième anneau de référence 54 superposé à l'anneau de référence 53. Les deux anneaux de référence superposés 53, 54 pourraient toutefois être constitués par un anneau unique dont la longueur dans le sens axial serait égale au double de la longueur de chacun des anneaux de référence individuels 53, 54. En tout état de cause, les branches ouvertes des circuits magnétiques 10, 20, 30, 40 à section en U des détecteurs 1 à 4 sont disposées de manière à se terminer à faible distance de l'anneau de référence 53 respectivement 54 avec lequel elles coopèrent en ménageant un faible entrefer. Les détecteurs 1 à 4 sont ainsi conçus de manière à créer un flux magnétique dont les lignes de champ se referment axialement dans les anneaux de référence 53, 54.

Les circuits magnétiques 10, 20, 30, 40 des détecteurs 1 à 4 sont avantageusement réalisés en ferrite. Toutefois, ceux-ci peuvent également être constitués par des assemblages de tôles en U d'une façon analogue à la réalisation de circuits magnétiques de stators de paliers magnétiques axiaux.

Les anneaux de référence 53, 54 sont eux-mêmes réalisés de préférence en ferrite et permettent ainsi une réalisation précise et homogène. Toutefois ceux-ci peuvent également être réalisés en un matériau non magnétique bon conducteur tel que l'argent, l'aluminium ou du bronze.

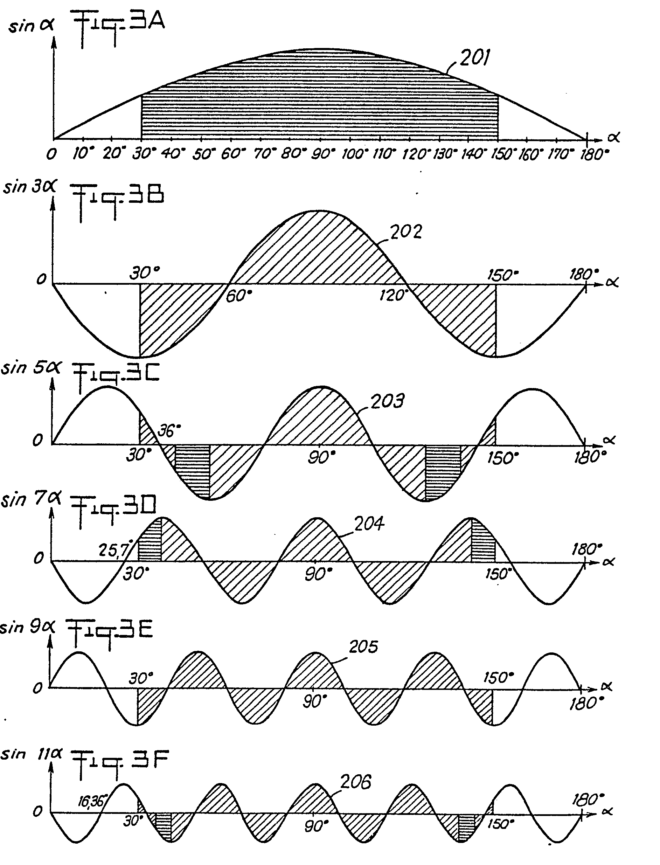

On considérera maintenant les figures 3A à 3F qui permettent de comprendre un avantage essentiel du dispositif de détection selon l'invention.

Comme cela a été indiqué précédemment, un anneau de référence 53, 54, même fabriqué avec une très grande précision, présente toujours des irrégularités résiduelles de sorte qu'il n'est pas parfaitement circulaire. Les variations du rayon d'un anneau de référence 53, 54 en fonction de l'angle polaire X correspondant audit rayon sont représentées par une courbe qui peut être considérée comme étant la superposition d'un très grand nombre de sinusoïdes de périodes égales aux fractions entières successives de 360° et correspondant ainsi à des harmoniques dont la fréquence est un multiple de celle correspondant à la rotation du rotor. La figure 3A représente la courbe sinusoidale fondamentale correspondant à une évolution à la vitesse de rotation du rotor et les figures 3B à 3F représentent les courbes sinusoïdales correspondant respectivement aux 3ème, 5ème, 7ème, 9ème et 11ème harmoniques.

On constate que le choix d'une ouverture angulaire de 120° pour chacun des détecteurs 1 à 4 permet une suppression totale de la troisième harmonique (figure 3B) et des harmoniques multiples de trois (figure 3E), puisque chaque détecteur 1, 2, 3, 4, par sa largeur correspondant à un secteur de 120°, couvre une ou plusieurs périodes entières de sinusoïde. Sur les figures 3A à 3F, les portions de sinusoïde non prises en compte par les détecteurs sont représentées en hachures inclinées tandis que les portions résiduelles de sinusoïde prises en compte par les détecteurs sont représentées par des hachures horizontales.

On remarque sur les figures 3C, 3D et 3F que pour des harmoniques impaires du cinquième, du septième et du onzième ordre, c'est-à-dire d'un ordre correspondant à un nombre premier, la fraction prise en compte par un détecteur correspond à l'inverse de l'ordre de l'harmonique, c'est-à-dire est respectivement égale à 1/5e, 1/7e et 1/11e. On voit que pour des harmoniques d'un ordre supérieur à 10, le taux résiduel de l'harmonique pris en compte par un détecteur est inférieur à 10% et va en diminuant au fur et à mesure que l'ordre considéré de l'harmonique augmente. Le fait que dans le dispositif de détection selon l'invention chaque détecteur élémentaire couvre un arc de 120° permet de s'assurer que pour toutes les harmoniques à partir de la troisième au moins une période entière et à partir de la 7ème harmonique au moins deux périodes entières sont intégrées par un détecteur élémentaire, ce qui conduit à une réduction extrêmement sensible de la part d'harmonique prise en compte par le dispositif de détection et assure à la fois une réduction des vibrations du système de suspension magnétique et une économie d'énergie dans les circuits d'asservissement.

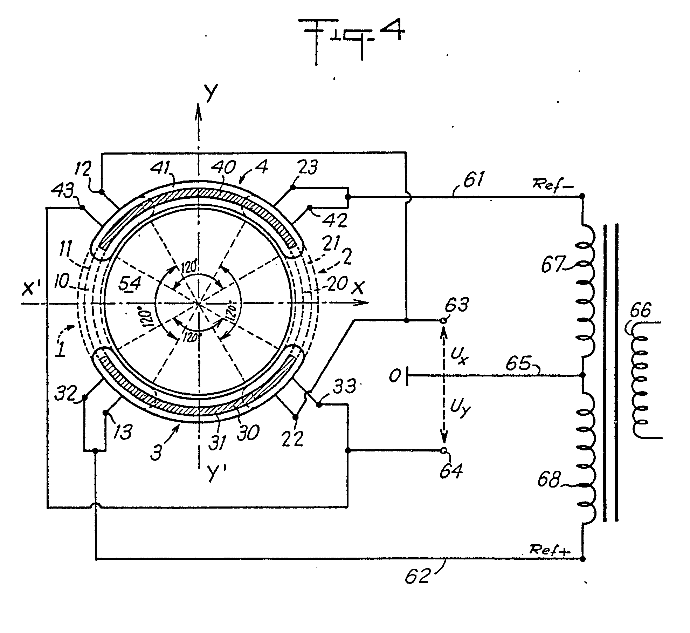

Par ailleurs, toutes les harmoniques paires peuvent être totalement rejetées si l'on adopte un montage en pont tel que celui représenté sur la figure 4 pour les quatre détecteurs 1 à 4 assurant une détection selon les axes X'X et Y'Y.

Le schéma de la figure 4 représente un pont de Wheatstone à courant alternatif. Les éléments inductifs 1 à 4 constitués par les détecteurs élémentaires décrits précédemment en référence aux figures 1 et 2 sont excités par un courant porteur alternatif de quelques dizaines de kilohertz fourni par l'intermédiaire d'un transformateur comprenant un enroulement primaire 66 et deux enroulements secondaires 67, 68 présentant un point milieu 65. Les diverses bobines 11, 21, 31, 41 sont alimentées de telle manière que les signaux fournis par deux bobines d'une même paire 1, 2 respectivement 3, 4 situées dans un même plan de façon diamétralement opposée pour détecter des déplacements selon une même direction X'X respectivement Y'Y se retranchent algébriquement.

On voit ainsi sur la figure 4 que les bornes de connexion 13, 32 des bobines 11 et 31 sont reliées à la ligne 62 de référence d'alimentation positive tandis que les bornes de connexion 23, 42 des bobines 21 et 41 sont reliées à la ligne 61 de référence d'alimentation négative. Les bornes de connexion 12, 22 des bobines 11, 21 sont reliées entre elles et connectées à la borne de sortie 63 sur laquelle sont délivrés les signaux Ux représentant les déplacements selon l'axe X'X et les bornes de connexion 33, 43 des bobines 3, 4 sont reliées entre elles et connectées à la borne de sortie 64 sur laquelle sont délivrés les signaux Uy représentant les déplacements selon l'axe Y'Y.

On conçoit facilement que toutes les harmoniques paires sont rigoureusement éliminées avec le schéma de la figure 4, puisque deux détecteurs diamétralement opposés 1, 2 ou 3, 4, qui sont séparés par un nombre entier de longueur d'onde de sinusoïdes desdites harmoniques, délivrent pour ces harmoniques paires des signaux identiques dont la différence est nécessairement nulle.

Il s'ensuit qu'un dispositif tel que celui représenté sur la figure 4 présente non seulement une simplicité de fabrication plus grande que les dispositifs de l'art antérieur pour de nombreuses applications, mais encore garantit une suppression soit totale, soit très substantielle de l'ensemble des harmoniques à partir de la deuxième, de sorte que, malgré les défauts résiduels des anneaux de référence 53, 54, les signaux délivrés par le dispositif de détection représentent bien des déplacements réels du rotor 50 et non de simples variations périodiques correspondant à des irrégularités du rayon de rotation des anneaux de référence.

Le dispositif selon l'invention se prête à de nombreuses variantes. Ainsi, par exemple, bien que l'on ait décrit un montage à stator extérieur et rotor intérieur, un dispositif conforme à l'invention peut facilement être adapté à un montage à rotor extérieur et stator intérieur.

Par ailleurs, s'il est préférable d'utiliser des éléments inductifs s'étendant chacun sur un arc de cercle de 120° et éliminant totalement les harmoniques de rang trois ou multiple de trois, une valeur voisine, mais légèrement différente conduirait également à un taux de réjection important des harmoniques de rang élevé dès lors que les éléments inductifs sont à flux axial avec la configuration décrite précédemment.

## Revendications

1. Dispositif de détection magnétique des déplacements radiaux d'un rotor (50) monté sur des paliers magnétiques actifs, comprenant une pluralité d'éléments inductifs (1, 2, 3, 4) à entrefer variable solidaires du stator (100) sur lequel sont montés lesdits paliers, et au moins un anneau de référence (53, 54) solidaire du rotor (50), placé en regard desdits éléments inductifs (1, 2, 3, 4) et délimitant avec ces derniers ledit entrefer variable, caractérisé en ce que les éléments inductifs (1, 2, 3, 4) comprennent chacun un circuit magnétique (10, 20, 30, 40) dont la section dans un plan axial présente la forme d'un U, et un bobinage (11, 21, 31, 41) disposé dans un plan radial qui constitue un plan de symétrie pour le circuit magnétique correspondant (10, 20, 30, 40) de telle sorte que chaque élément inductif (1, 2, 3, 4) crée un flux magnétique axial dans l'anneau de référence (53, 54) avec lequel il coopère, en ce que les éléments inductifs (1, 2, 3, 4) sont répartis dans deux plans radiaux voisins différents ($P_1$, $P_2$), un premier plan radial ($P_1$) comprenant un premier anneau de référence (53) solidaire du rotor (50), coopérant avec des premier et second éléments inductifs (1, 2) diamétralement opposés et présentant un premier plan axial de symétrie commun X'X, et un second plan radial ($P_2$) comprenant un second anneau de référence (54) solidaire du rotor (50), coopérant avec des troisième et quatrième éléments inductifs (3, 4) diamétralement opposés et présentant un second plan axial de symétrie commun Y'Y, et en ce que chaque élément inductif (1, 2, 3, 4) s'étend sur un arc de cercle de 120° environ.

2. Dispositif de détection selon la revendication 1, caractérisé en ce que les premier et second anneaux de référence superposés (53, 54) sont constitués par un anneau unique de référence.

3. Dispositif de détection selon la revendication 1, caractérisé en ce que les premier et second anneaux de référence (53, 54) sont réalisés en ferrite.

4. Dispositif de détection selon la revendication 1, caractérisé en ce que les premier et second anneaux de référence (53, 54) sont réalisés en un matériau bon conducteur non magnétique tel que l'argent, l'aluminium ou le bronze.

5. Dispositif de détection selon l'une quelconque des revendications 1 à 4, caractérisé en ce que les éléments inductifs (1, 2, 3, 4) comprennent un circuit magnétique (10, 20, 30, 40) réalisé en ferrite.

6. Dispositif de détection selon l'une quelconque des revendications 1 à 4, caractérisé en ce que les éléments inductifs (1, 2, 3, 4) comprennent un circuit magnétique (10, 20, 30, 40) constitué par un empilement de tôles en forme de U parallèles à l'axe du rotor (50).

7. Dispositif de détection selon l'une quelconque des revendications 1 à 6, caractérisé en ce que les éléments inductifs (1, 2, 3, 4) sont montés en pont et en ce que les signaux fournis par deux éléments inductifs (1, 2 resp. 3, 4) situés dans un même plan radial ($P_1$ resp. $P_2$) et diamétralement opposés se retranchant algébriquement l'un de l'autre.

**Patentansprüche**

1. Magnetische Vorrichtung zur Feststellung der radialen Verschiebungen eines auf aktiven magnetischen Lagern angebrachten Rotors (50), aufweisend eine Anzahl induktiver Elemente (1, 2, 3, 4) mit variablem Luftspalt, fest mit dem Stator (100) verbunden, auf dem die Lager angebracht sind, und wenigstens einen fest mit dem Rotor (50) verbundenen Referenzring (53, 54), der gegenüber den induktiven Elementen (1, 2, 3, 4) angeordnet ist und mit letzteren den variablen Luftspalt begrenzt, dadurch gekennzeichnet, dass die induktiven Elemente (1, 2, 3, 4) jeweils einen Magnetkreis (10, 20, 30, 40), dessen Schnitt in einer axialen Ebene die Form eines U aufweist und eine in einer radialen Ebene vorgesehene Wicklung (11, 21, 31, 41) aufweist, die eine Symmetrieebene für den entsprechenden Magnetkreis (10, 20, 30, 40) bildet derart, dass jedes induktive Element (1, 2, 3, 4) einen axialen Magnetfluss im Referenzring (53, 54) erzeugt, mit dem es zusammenwirkt, dass die induktiven Elemente (1, 2, 3, 4) in zwei verschiedenen benachbarten radialen Ebenen ($P_1$, $P_2$) verteilt sind, einer ersten radialen Ebene ($P_1$), aufweisend einen mit dem Rotor (50) fest verbundenen ersten Referenzring (53), zusammenwirkend mit ersten und zweiten induktiven Elementen (1, 2), die diametral gegenüberliegend sind und eine gemeinsame erste axiale Symmetrieebene X'X aufweisen, und eine zweite radiale Ebene ($P_2$), aufweisend einen fest mit dem Rotor (50) verbundenen zweiten Referenzring (54), zusammenwirkend mit dritten und vierten induktiven Elementen (3, 4), die diametral gegenüberliegend sind und eine gemeinsame zweite axiale Symmetrieebene Y'Y aufweisen, und dass sich jedes induktive Element (1, 2, 3, 4) über einen Kreisbogen von ungefähr 120° erstreckt.

2. Feststellungsvorrichtung nach Anspruch 1, dadurch gekennzeichnet, dass die ersten und zweiten übereinander angeordneten Referenzringe (53, 54) durch einen einzigen Referenzring gebildet sind.

3. Feststellungsvorrichtung nach Anspruch 1, dadurch gekennzeichnet, dass der erste und zweite Referenzring (53, 54) aus Ferrit ausgeführt sind.

4. Feststellungsvorrichtung nach Anspruch 1, dadurch gekennzeichnet, dass der erste und zweite Referenzring (53, 54) aus einem nicht magnetischem guten Leitermaterial, wie Silber, Aluminium oder Bronze, ausgeführt sind.

5. Feststellungsvorrichtung nach einem beliebigen der Ansprüche 1 bis 4, dadurch gekennzeichnet, dass die induktiven Elemente (1, 2, 3, 4) einen aus Ferrit ausgeführten Magnetkreis (10, 20, 30, 40) aufweisen.

6. Feststellungsvorrichtung nach einem beliebigen der Ansprüche 1 bis 4, dadurch gekennzeichnet, dass die induktiven Elemente (1, 2, 3, 4) einen Magnetkreis (10, 20, 30, 40) aufweisen, der durch Aufeinanderschichten von zur Achse des Rotors (50) parallelen Blechen mit U-Form gebildet ist.

7. Feststellungsvorrichtung nach einem beliebigen der Ansprüche 1 bis 6, dadurch gekennzeichnet, dass die induktiven Elemente (1, 2, 3, 4) brückenartig angebracht sind und dass die von zwei in einer gleichen radialen Ebene ($P_1$ bzw. $P_2$) liegenden und diametral gegenüberliegenden induktiven Elementen (1, 2 bzw. 3, 4) gelieferten Signale sich algebraisch einander vermindern.

## Claims

1. Radial displacement magnetic detector device for a rotor (50) mounted on active magnetic bearings, of the type comprising a plurality of inductive elements (1, 2, 3, 4) with variable air gap, which are integral with the stator (100) on which are mounted said bearings, and at least one reference ring (53, 54) which is integral with the rotor (50), placed in facing relation to said inductive elements (1, 2, 3, 4) and defining with them the said variable air gap, characterized in that each of the inductive elements (1, 2, 3, 4) comprises a magnetic circuit (10, 20, 30, 40) of which the cross-section in axial plane is U-shaped, and a coil (11, 21, 31, 41) situated inside a radial plane which constitutes a plane of symmetry for the corresponding magnetic circuit (10, 20, 30, 40) such that each conductive element (1, 2, 3, 4) creates an axial magnetic flux in the reference ring (53, 54) with which it cooperates, in that the inductive elements (1, 2, 3, 4) are distributed in two separate adjacent radial planes $(P_1, P_2)$ a first radial plane $(P_1)$ comprising a first reference ring (53) integral with the rotor (50), cooperating with first and second diametrically opposite inductive elements (1, 2) having a first axial plane of symmetry in common X'X, and a second radial plane $(P_2)$ comprising a second reference ring (54) integral with the rotor (50), cooperating with third and fourth diametrically opposite inductive elements (3, 4) having a second axial plane of symmetry in common Y'Y, and in that each of said inductive elements (1, 2, 3, 4) extends over an arc of circle of about 120°.

2. Detector device according to claim 1, characterized in that said first and second superposed reference rings (53, 54) are constituted by a single reference ring.

3. Detector device according to claim 1, characterized in that said first and second reference rings (53, 54) are made of ferrite.

4. Detector device according to claim 1, characterized in that said first and second reference ring (53, 54) are made of a conducting non-magnetic material such as silver, aluminium or bronze.

5. Detector device according to any one of claims 1 to 4, characterized in that said inductive elements (1, 2, 3, 4) comprise a magnetic circuit (10, 20, 30, 40) made of ferrite.

6. Detector device according to any one of claims 1 to 4, characterized in that said inductive elements (1, 2, 3, 4) comprise a magnetic circuit (10, 20, 30, 40) composed of a stack of U-shaped plates parallel to the rotor (50).

7. Detector device according to any one of claims 1 to 6, characterized in that said inductive elements (1, 2, 3, 4) are mounted in bridge fashion, the signal supplied by two inductive elements (1, 2, resp. 3, 4) situated diametrically opposite inside the same radial plane $(P_1$ resp. $P_2)$ being algebraically deductible one from the other.

Fig.1

$2\alpha_m = 120°$

$2\alpha_m = 120°$

Fig.2

2/3

3/3

Fig.4